# EUROPEAN PATENT APPLICATION

(11) **EP 4 625 182 A1**
(43) Date of publication of application: **01.10.2025**
(21) Application number: 25159234.1
(22) Date of filing: 20.02.2025
(51) Int. Cl.: G06F 12/0813, G06F 12/0831, G06F 12/084

(54) **COHERENT CACHE FABRIC WITH REDUCED POWER MODE**

(30) Priority: 28.03.2024 US 202418620956
(71) Applicant: Intel Corporation, Santa Clara, CA 95054 (US)
(72) Inventor: POLISHUK, Leon, Haifa 3467701 (IL); ROTEM, Efraim, Santa Clara, 95051 (US); MISGAV, Nir, Ein Hahoresh 3898000 (IL); WEISSMAN, Eliezer, Haifa 34995 (IL); MANDELBLAT, Julius, Haifa 34454 (IL); RECHTER, Roman, Netanya 4237696 (IL); INSLER, Talia, Gedera 7056220 (IL); MELAMED, Keren, Binyamina 3057803 (IL)
(74) Representative: HGF

(57) **Abstract**

Power may be reduced by dynamically controlling coherent cache fabric (CCF) utilization to efficiently support the number of active cores. In some embodiments, this may be achieved by dynamically reducing or even bypassing the CCF.

## Description

### TECHNICAL FIELD

Embodiments of the invention relate to the field of integrated circuits; and more specifically, to the field of coherent fabric circuits.

### BRIEF DESCRIPTION OF THE DRAWINGS

The disclosure may best be understood by referring to the following description and accompanying drawings that are used to illustrate embodiments of the invention. In the drawings:
Fig. 1 is a block diagram of a processor system in accordance with some embodiments.
Figs. 2A and 2B are diagrams showing a coherent core complex in accordance with some embodiments.
Fig. 3 is a flow diagram showing a routine 300 for entry into and exit from a reduced CCF mode in accordance with some embodiments.
Fig. 4 is a diagram showing a CCC with a reduced CCF power mode in accordance with some additional embodiments.
Fig. 5 is a flow diagram showing a CCF bypass routine in accordance with some embodiments.
Fig. 6 illustrates an example computing system in accordance with some embodiments.
Fig. 7 illustrates a block diagram of an example processor 700 that may be used in the system of Fig. 6 in accordance with some embodiments.
Fig. 8(A) is a block diagram illustrating both an exemplary in-order pipeline and an exemplary register renaming, out-of-order issue/execution pipeline in accordance with some embodiments.
Fig. 8(B) is a block diagram illustrating both an exemplary example of an in-order architecture core and an exemplary register renaming, out-of-order issue/execution architecture core to be included in a processor in accordance with some embodiments.
Fig. 9 illustrates examples of execution unit(s) circuitry, such as execution unit(s) circuitry 862 of Fig. 8(B) in accordance with some embodiments.

### DETAILED DESCRIPTION

In modern and future mobile systems, the power consumption of processor system integrated circuit (IC) packages is a major limiting factor for performance. It is extremely difficult to dissipate heat in slim form factors. As a result, processor packages typically have to operate within a limited power budget, which is divided among the different components. This can lead to performance bottlenecks, as some components may not be able to operate at their full potential due to the limited available power.

Accordingly, in some embodiments, power may be reduced by dynamically controlling coherent cache fabric (CCF) utilization to efficiently support the number of active cores. In some embodiments, this may be achieved by dynamically reducing or even bypassing the CCF. When a power/performance management control system for the CCF identifies a suitably low active-core scenario, it switches to a low power CCF topology, connecting the active core(s) while power gating (or by passing much of the fabric. When the system identifies that multiple cores are needed for performance, it can then switch back to the higher performance CCF mode.

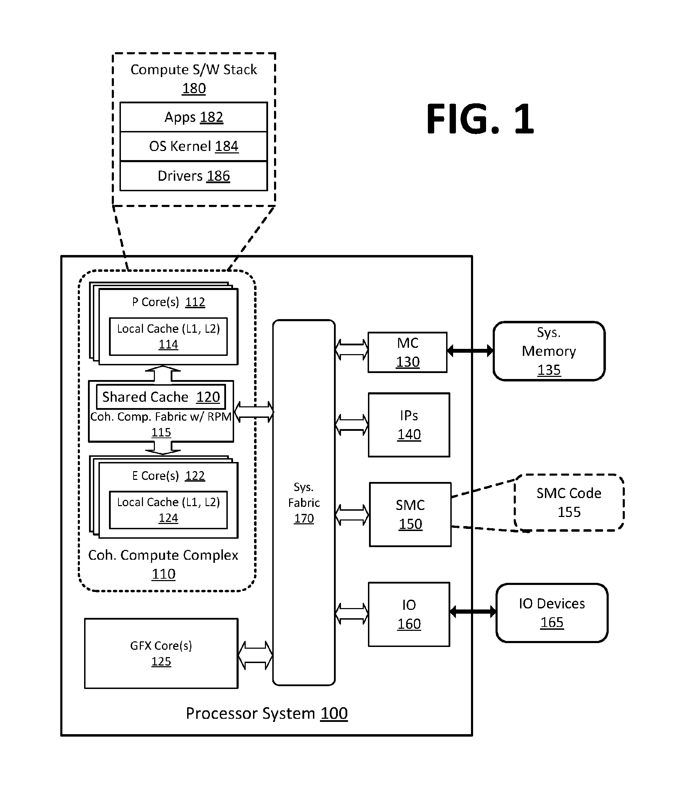

Fig. 1 is a block diagram of a processor system 100 in accordance with some embodiments. The processor system (or simply processor) 100 generally includes a coherent compute complex (CCC) 110, graphics core(s) 125, memory controller 130 with associated system memory 135, IP blocks 140, system management controller(s) (SMC) 150, IO controller(s) 160 with associated IO devices 175, coupled together through system interconnect fabric 170 as shown. The system fabric 170 may be implemented with one or more busses, rings, and/or mesh networks, depending upon particular design configurations and objectives. (Note that IP stands for intellectual property and is typically used to indicate a re-usable block of functional circuitry for performing one or more functions. As used herein, the terms IP, IP block, or functional block may be used interchangeably, not only to refer to re-useable functional circuit blocks, whether self-designed or acquired from a third-party, but also, to product specific circuit blocks. Examples of functional, or IP, blocks include but are not limited to display engines, video processing units, image processing units, graphics processing units, compute cores, digital signal processing units, universal serial bus controllers, memory controllers, crypto encoders/decoders, and the like.)

The coherent compute complex (CCC) generally includes different compute (sometimes referred to as CPU cores) including P (performance) cores 112 and E (efficiency) cores 122 coherently coupled together through coherent compute fabric 115. In the depicted embodiment, both the P and E cores include L1 and L2 cache, 114, 124, respectively, although the P core caches may be larger and/or configured differently to accommodate the particular demands of the P cores. For example, in some embodiments, the E cores 122 may be clustered together and share none, part or all of their L2 cache with each other, e.g., through a separate E cache fabric (not shown).

Both the P and E compute cores 112, 122 process software from software stack 180, which includes applications 182, operating system (OS) kernel modules 184 and drivers 186 for monitoring and/or controlling the hardware, or circuitry, within processor system 100. Among other things, the OS 184 and drivers 186 may work together with the SMC 150 to manage power and performance (PnP) for the various blocks within processor system 100.

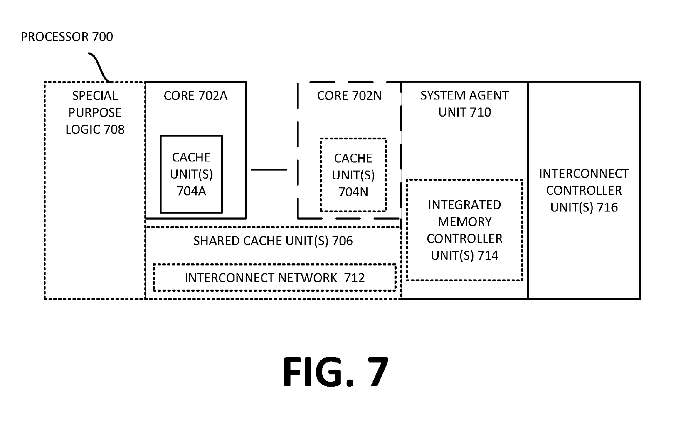

The P and E cores are different from each other with regard to their design bias toward performance or efficiency. In the depicted embodiment, for simplicity, two compute core types, P and E, are shown. P cores are generally designed with a bias toward higher performance capability at the expense of higher power consumption, while E cores are biased toward more efficient operation, consuming less power but with less performance potential. It should be appreciated that even though only two compute core types have been shown, there may be additional compute core types, or classes, within the CCC 110, having different degrees or kinds of performance and processing efficiency capabilities. For example, higher performance capabilities may derive from having more robust instruction sets, e.g., from having additional instruction types such as floating point or advanced vector instructions and/or from having larger execution unit arrays such as with multiple instances of equivalent instructions. Examples of core, instruction and execution architectures are shown in Figs. 7-9 and discussed below.

The different performance capabilities of a core may be due to a core's architecture and size, but it also may be due to the way that the core is connected to the rest of the processor. For example, there may be uniform cores, but some may be on a separate power island that makes them more energy efficient. Also, identical cores on a remote chiplet may be the same type as those on a closer die but due to the relative differences in distance, may be lower in performance and less efficient.

In some embodiments, having different P and E core types may be referred to as a hybrid processing system implementation. Note that in many implementations, the different P/E type compute cores, while having different power/performance profiles, will typically have a common set architecture (ISA). In other embodiments, one or some of the different P/E core types may utilize different ISAs relative to the other P/E compute core types.

The SMC 150 includes one or more microcontrollers, state machines and/or other logic circuits for controlling various aspects of the processor system 100. For example, it may manage functions such as security, boot configuration, and power and performance including utilized and allocated power along with thermal management. The SMC may also be referred to as a P-unit, a power management unit (PMU), a power control unit (PCU), a system management unit (SMU) and the like and may include multiple SMCs, PMUs, die management controllers, etc. The SMC executes SMC code 135, which may include multiple separate software and/or firmware modules to perform these and other functions. In some embodiments, it may perform routines, discussed further below, to determine, or assist in determining, whether or not the coherent compute fabric 115 should go into or exit from a reduced power mode (RPM).

The coherent compute fabric (CCF) 115 includes a shared cache such as so-called last level, e.g., L3 cache 120 for the compute complex 110. As will be discussed in more detail below, the CCF 115 includes a reduced power mode (RPM) capability that allows for it to be partially or wholly power gated in order to save power while a low amount of thread processing demand is required for the compute complex 110. In some embodiments, a routine for determining whether or not to go into a reduced CF power mode may be performed by the SMC but in other embodiments, it may be performed, wholly or partially, by an autonomous or quasi-autonomous control circuit within the CF itself.

(It should be appreciated that the processor system 100 may be implemented in various different manners. For example, it may be implemented on a single die, multiple dies (dielets, chiplets), one or more dies in a common package, or one or more dies in multiple packages. Along these lines, some of these blocks may be located separately on different dies or together on two or more different dies. In addition, while the terms "P/E" are used to delineate between higher and lower compute cores based on their processing performance and efficiency capabilities, it should be appreciated that other terms may be used such as "big/little," "gold/silver", and the like.)

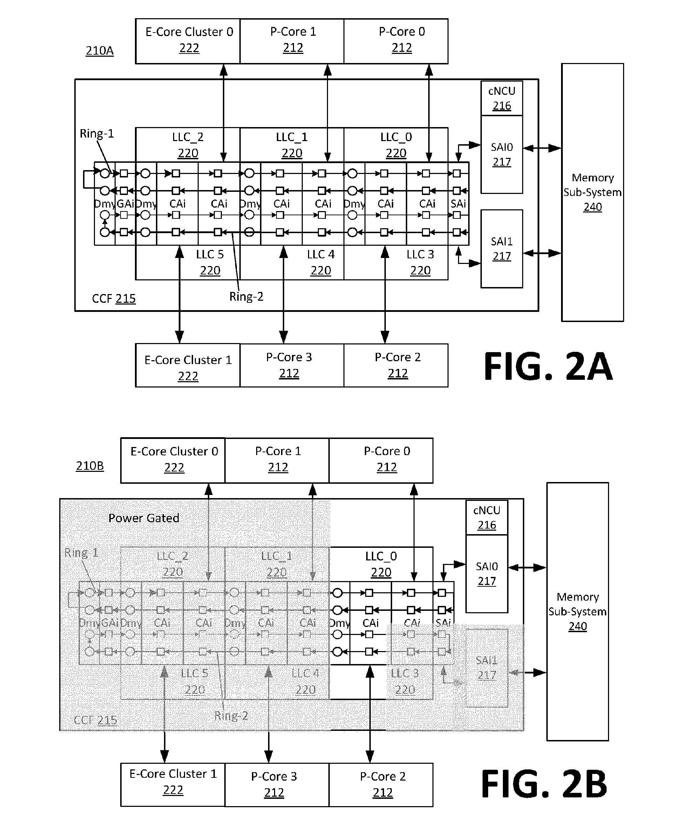

Figs. 2A and 2B are diagrams showing a coherent core complex in accordance with some embodiments. Fig. 2A shows a coherent core complex (CCC) 210A with an ungated CCF 215, while Fig. 2B shows the CCC 210B with a CCF 215 having, and being in, a reduced, power gated mode. In the depicted embodiment, the compute cores include four P cores 212 (P-Core 0 through P-Core 3) and two E core clusters 222 (E-Core Cluster 0, E-Core Cluster 1), all coupled to each other and to shared LLC cache slices 220 (LLC 0 through LLC 5) through CCF 215. In some embodiments, the E core clusters each include four E cores. Each of the LLC slices 220 is associated with one of the core units. For example, LLC 0 may be associated with P core 0, LLC 3 may be associated with P core 2, and so on through LLC 5, which is associated with E core cluster 1.

The CCF 215 provides a coherent communications fabric for providing the compute cores, as well as the rest of the processor system, with coherent access to the L3 shared cache 220. It also facilitates coherency for access to internal cache between the cores and for the rest of the system.

The CCF 215 includes cache agent instances (CAi), dummy stops (Dmy), a graphics agent instance (GAi), and a system agent instance (SAi), coupled together through redundant rings (Ring-1, Ring-2) and also to the LLC circuit blocks (e.g., slices) and their associated cores or core clusters. The Gai tracks graphics memory domain parameters to facilitate coherent transactions between the CCC and the graphics memory domain. Similarly, the SAi tracks system agent domain (e.g., memory sub-system, IO) parameters to facilitate coherent transactions between the CCC and the SA domain. Together, the various agent instances (or simply agents) facilitate coherent transactions by the cores and other system entities to the cache memory locations including both internal (L1, L2), as well as the shared (LLC) cache. The dummy stops are used on the rings for timing, essentially functioning as repeaters.

The CCF also includes a non coherent control unit (cNCU) 216 for handling non-coherent traffic with entities outside of the CCF. When a core sends requests to the CCF, it forwards the request to the cNCU if the transaction address corresponds to a non-coherent entity.

The CCF also includes system agent interfaces (SAI1, SAI2) 217, which are interface circuits that couple the rings through the system agent instance, on the rings, to a system agent fabric (not shown) for transactions with a memory sub-system 240, IO, and other entities outside of the CCC. System agent domain circuitry also incorporates a home agent (HA) discussed further below. In some embodiments, the SAIs (system agent interfaces) 217 incorporate a system authorization facility (SAF) to provide system authorization services to control access to memory resources.

The cache agent instances (CAi or simply cache agents) manage interfaces between the cores and the last level caches (LLCs). Core transactions that access the LLC are directed from the core to a CAi via the ring interconnect (Ring-1, Ring-2). The CA instances are responsible for managing data delivery from the LLC to the requesting core or SA/GA entity. There are different types of transactions, but for simplicity, reads or writes may be exemplified for core requests. The CAs are also responsible for maintaining coherence between the cores, which share the LLC, generating snoops and collecting snoop responses from the cores when, for example, required by a protocol.

In some embodiments, each physical memory addresses in the processor system are uniquely associated with a cache agent instance (CAi or CA instance) via a hashing algorithm designed to keep the distribution of traffic across the CA instances relatively uniform for a wide range of possible address patterns. In turn, physical addresses may uniquely be hashed into LLC blocks (e.g., slices). For example, each individual physical address may belong to a LLC block and also to a home agent (HA). Both the CA instances and home agents may have directory information. They generally know where to direct read/write transactions along with associated snoops.

A home agent interacts with the system agent domain by handling coherence for SA domain transactions that hit in the CCC. In some embodiments, a home agent is responsible for ensuring that the most recent copy of requested data is returned to the requestor either from memory or a caching agent instance that owns the requested data. The home agent may also be responsible for invalidating copies of data at other caching agent instances if the request is for an exclusive copy, for example. For these purposes, a home agent generally may snoop every caching agent or rely on a directory to track a set of caching agents where data may reside.

Under normal CCC workload conditions (e.g., two or more cores are active), the CCF is reasonably efficient in terms of its power consumption relative to performance value. However, when the cores are running under low-activity scenarios (e.g., single core or two active cores), with the CCF being active, it has been observed in some models that 55% of the power budget may be allocated to the active core(s), 30% to the CCF, and the rest consumed by the system agent domain. Problematically, about 55% of this CCF power consumption is attributable to power leakage. Thus, especially in low-activity or low power applications, CCF leakage power may be substantial. It has been appreciated that when operating in low-activity modes, the CCF may be reduced or bypassed without significantly detracting CCC performance.

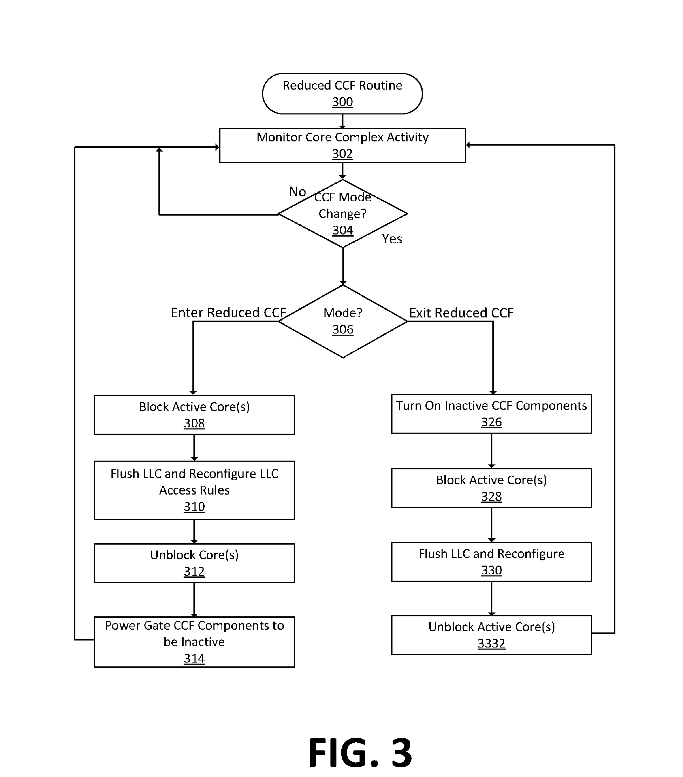

Fig. 2B illustrates the CCF of Fig. 2A but in a reduced power mode. The CCF 215 includes power gate switch circuitry, embedded within the CCF, to power gate most of the rings, LLC slices, and agents. One caching agent instance (CAi) and its associated LLC slice, along with a small portion of one of the rings, the SAi, one of the SAIs, and the cNCU are kept on. The GA may also remain active. The active core(s) can still have the advantage of an active LLC and use the caching agent services on its CAi that remains active. When the CCF is transitioned to the reduced power mode, the CCF may be reconfigured to compensate for the inactive CA instances, e.g., re-mapping their associated address parameters and adjusting the sending rules on the fabric. Reduced CCF mode entry and exit flows are described below in the flow diagram of Fig. 3.

Fig. 3 is a flow diagram showing a routine 300 for entry into and exit from a reduced CCF mode in accordance with some embodiments. At 302, the routine monitors core complex activity. At 304, it determines whether or not to go into or exit from a reduced CCF power mode. If neither, then it loops back to 302 and continues monitoring until a mode change is warranted. If it is warranted, then the routine proceeds to 306 to determine whether to enter into or exit from the reduced CCF mode.

In some embodiments, in order to decide whether to enter reduced CCF mode, the routine may monitor core metrics, e.g., at an SMC or even directly from the core(s), e.g., through hardware guided scheduling circuits that may be used to provide hints to an operating system for core parking decisions. When sufficient core inactivity is detected, e.g., all cores except one are parked or are to be parked, the system may then decide to enter the reduced CCF mode based on core CCF metrics such as hit rates and uncore bandwidth.

The hit rate pertains to core LLC access hits, when valid data is in the LLC and not outside of the CCF. The hit rate is the number of hits divided by the total number of LLC accesses. There may be situations such as with a relatively high hit rate when even if all cores except one are parked, keeping most or all of the LLC active may be beneficial.

Uncore bandwidth (UBW) pertains to the bandwidth for CCF transactions with entities outside of the CCF. In situations with low, especially extremely low, UBW, keeping the whole LLC active will likely not be energy efficient, even in cases with high hit rates. In some embodiments, both telemetries (HR and UBW) may be considered against predefined thresholds when deciding on whether to transition to a reduced CCF mode.

Another consideration may be flush efficiency. Flush efficiency depends on LLC size, memory bandwidth, LLC lines to be modified, and the like. However, it should be remembered that when the routine is deciding on whether to enter a reduced CCF mode, it most likely has already determined that most, if not all but one, core(s) are inactive, implying that their internal caches have already been flushed. For these different entry/exit metrics, thresholds and weights may be calibrated based on specific processor configurations and implementations.

Returning back to the flow diagram, if it is to enter a reduced CCF mode, then at 308, it blocks the active core(s). From here, at 310, it flushes the LLC and reconfigures the CCF components that are to be active. In some embodiments, it flushes just the LLC blocks for CA instances that are shutting down. It then may update the active CAi with line information (or address hashes) from the inactive CA instances for traffic that is routed thereto. In some embodiments, it may re-map the CCF and directly transfer data from the LLC blocks to be powered down into the active block/CAi. The routine also reconfigures LLC access rules to account for the LLC blocks that have been de-activated. Reconfiguring the CCF involves sending and routing rules on the ring(s). Multiplexers (not shown) may be used to select between the two modes to route the traffic differently. In addition, the system agent should be aware of the number of available CA instances.

At 312, the routine unblocks the active core(s) and at 314, it gates off the CCF/LLC components that are to be inactive.

The exit branch of the routine operates similarly except in reverse. At 326, it turns on the inactive LLC blocks and CCF components. At 328, it blocks the active core(s). Then at 330, it flushes the LLC and reconfigures the CCF for use with the LLC. At 332, it then unblocks the active core and resumes monitoring the CCC at 302. Note that in some embodiments, to mitigate scenarios where the application changes and requires the LLC while it is reduced, periodic wakeup exits may be employed.

With some embodiments described above, power and performance analysis were conducted to compare single core performance of the CCC of Fig. 2B with simulated versions of the reduced CCF. The CCF was effectively reduced by a factor of six. The penalties of shrinking the CCF were estimated to be 1% due to the introduction of feature latency and 2% to 6% due to the decrease in LLC size. But at the same time, overall performance increased due to the reduction of power overhead and the reallocation of power budget to the active P core. In some embodiments, results showed a performance gain of up to 10%, which is particularly evident under severe power constraints.

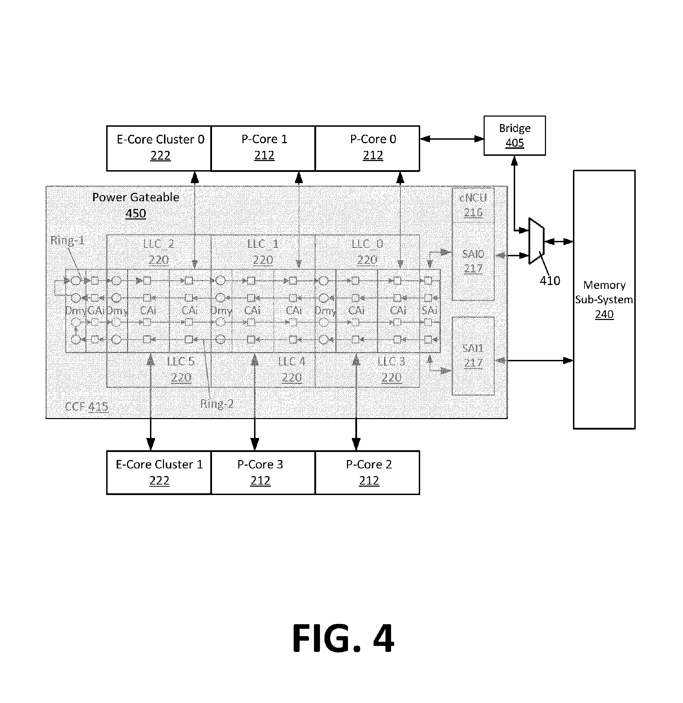

Fig. 4 is a diagram showing a CCC with a reduced CCF power mode in accordance with some additional embodiments. The CCC may be similar as with the CCC of Fig. 2A except that it includes a bridge 405 and a multiplexer 410 for bypassing the CCF 215. In some embodiments, with the bypass capability, the same power gate switch circuitry of Fig. 2B may not be required. That is, simpler power gating circuitry to shut off all of the fabric and LLC instead of a large portion of it while leaving some of it on may be used.

When the bypass mode is entered, the multiplexer 410 routes active core traffic through the bridge 405 and bypasses the CCF 215. In this way, the CCF may be substantially if not wholly powered down. The bridge circuit 405 may have its own non coherent control unit, along with protocol converters for transactions between the core and uncore portion, which allows the active core to directly connect with the SA domain including the memory subsystem. In some embodiments, a home agent in the system agent domain functions as a CAi for the active core. The CCF clock fabric may be shut down, so the clocking for connections between the core and the memory subsystem can be done using SA domain (e.g., memory subsystem) clock(s) and power rails. For transactions coming into the CCC when the bridge path is active, the home agent will typically have to snoop the active core, which will have up to date coherent domain line location information. Alternatively, the home agent could include a snoop filter.

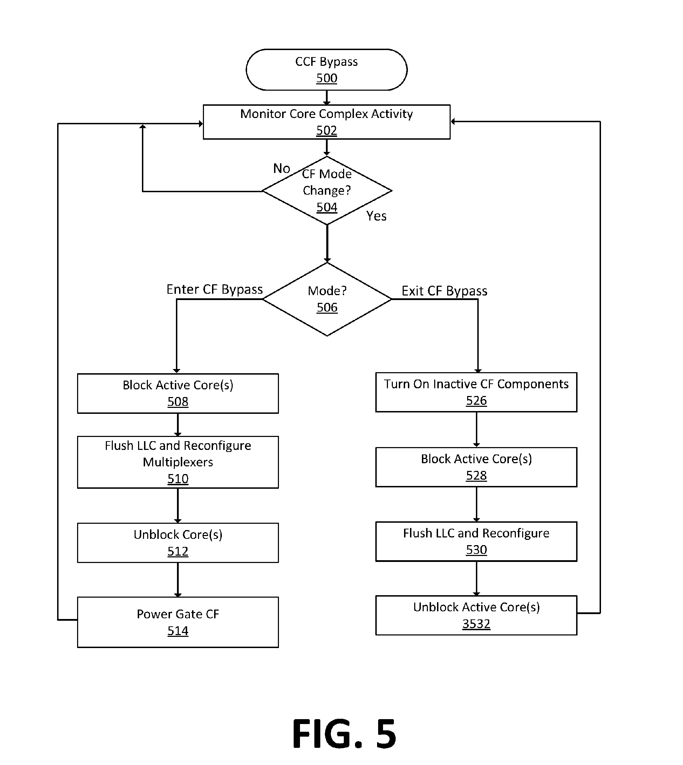

Fig. 5 is a flow diagram showing a CCF bypass routine in accordance with some embodiments. At 502, the routine monitors core complex activity. At 504, it determines whether or not to go into or exit from a CCF bypass, reduced power mode. If neither, then it loops back to 302 and continues monitoring until a mode change is warranted. If so, then the routine proceeds to 506 to determine whether to enter into or exit from the CCF bypass mode. The monitoring and determining whether or not to enter into or exit from a CCF bypass mode may be performed as described above with regard to Fig. 3.

Returning back to the flow diagram, if it is to enter a CCF bypass mode, then at 508, it blocks the active core(s). At 510, it flushes the LLC and controls the multiplexer(s) 510 to select the bridge path. In some embodiments, the routine may also update the bridge 405 with line and/or hash information for more efficient, direct communication through the SA domain and home agent. An advantage of using a bypass mode is that the active core need not be flushed. At 512, the routine unblocks the active core(s) and at 514, it gates off the CCF/LLC.

The exit branch of the routine operates similarly except in reverse. At 526, it turns on the inactive slices and CCF components. At 528, it blocks the active core(s). Then at 530, it flushes the LLC and reconfigures the CCF for use with the LLC. At 532, it then unblocks the active core and resumes monitoring the CCC at 502. Note that as with reduced CCF embodiments, to mitigate scenarios where the application changes and requires the LLC while it is inactive, periodic wakeup exits may be employed.

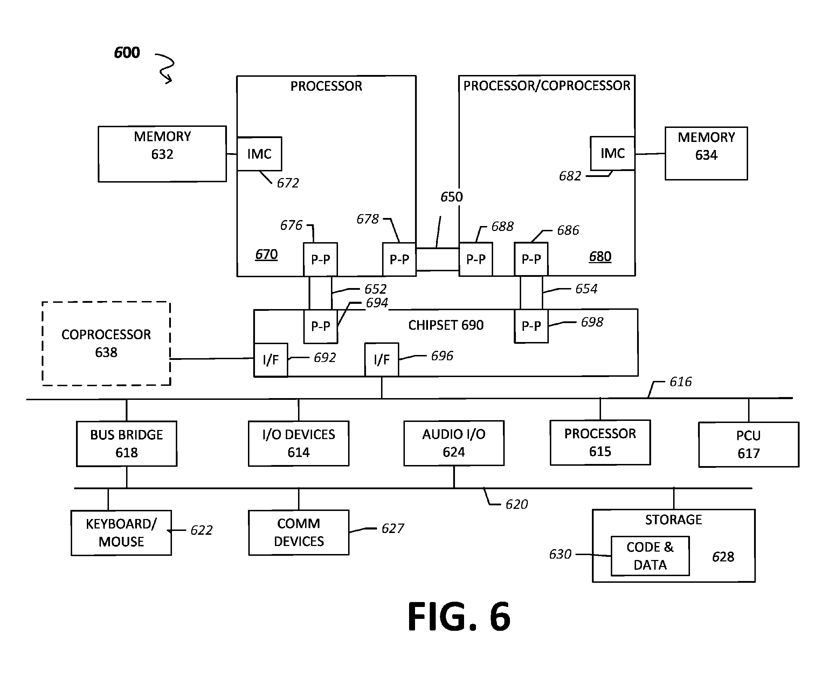

Fig. 6 illustrates an example computing system in accordance with some embodiments. Multiprocessor system 600 is an interfaced system and includes a plurality of processors including a first processor 670 and a second processor 680 coupled via an interface 650 such as a point-to-point (P-P) interconnect, a fabric, and/or bus. In some examples, the first processor 670 and the second processor 680 are homogeneous. In some examples, first processor 670 and the second processor 680 are heterogenous. Though the example system 600 is shown to have two processors, the system may have three or more processors, or may be a single processor system. In some examples, the computing system is implemented, wholly or partially, with a system on a chip (SoC) or a multi-chip (or multi-chiplet) module, in the same or in different package combinations.

Processors 670 and 680 are shown including integrated memory controller (IMC) circuitry 672 and 682, respectively. Processor 670 also includes interface circuits 676 and 678, along with core sets. Similarly, second processor 680 includes interface circuits 686 and 688, along with a core set as well. A core set generally refers to one or more compute cores that may or may not be grouped into different clusters, hierarchal groups, or groups of common core types. Cores may be configured differently for performing different functions and/or instructions at different performance and/or power levels. In some embodiments, either or both of the processors may include one or more core sets that are part of a CCC as described herein. The processors may also include other blocks such as memory and other processing unit engines.

Processors 670, 680 may exchange information via the interface 650 using interface circuits 678, 688. IMCs 672 and 682 couple the processors 670, 680 to respective memories, namely a memory 632 and a memory 634, which may be portions of main memory locally attached to the respective processors.

Processors 670, 680 may each exchange information with a network interface (NW I/F) 690 via individual interfaces 652, 654 using interface circuits 676, 694, 686, 698. The network interface 690 (e.g., one or more of an interconnect, bus, and/or fabric, and in some examples is a chipset) may optionally exchange information with a coprocessor 638 via an interface circuit 692. In some examples, the coprocessor 638 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 670, 680 or outside of both processors, yet connected with the processors via an interface such as P-P interconnect, such that either or both processors' local cache information may be stored in the shared cache if a processor is placed into a low power mode.

Network interface 690 may be coupled to a first interface 616 via interface circuit 696. In some examples, first interface 616 may be an interface such as a Peripheral Component Interconnect (PCI) interconnect, a PCI Express interconnect, or another I/O interconnect. In some examples, first interface 616 is coupled to a power control unit (PCU) 617, which may include circuitry, software, and/or firmware to perform power management operations with regard to the processors 670, 680 and/or co-processor 638. PCU 617 provides control information to one or more voltage regulators (not shown) to cause the voltage regulator(s) to generate the appropriate regulated voltage(s). PCU 617 also provides control information to control the operating voltage generated. In various examples, PCU 617 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 617 is illustrated as being present as logic separate from the processor 670 and/or processor 680. In other cases, PCU 617 may execute on a given one or more of cores (not shown) of processor 670 or 680. In some cases, PCU 617 may be implemented as a microcontroller (dedicated or general-purpose) or other control logic configured to execute its own dedicated power management code, sometimes referred to as P-code. In yet other examples, power management operations to be performed by PCU 617 may be implemented externally to a processor, such as by way of a separate power management integrated circuit (PMIC) or another component external to the processor. In yet other examples, power management operations to be performed by PCU 617 may be implemented within BIOS or other system software. Along these lines, power management may be performed in concert with other power control units implemented autonomously or semi-autonomously, e.g., as controllers or executing software in cores, clusters, IP blocks and/or in other parts of the overall system.

Various I/O devices 614 may be coupled to first interface 616, along with a bus bridge 618 which couples first interface 616 to a second interface 620. In some examples, one or more additional processor(s) 615, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 616. In some examples, second interface 620 may be a low pin count (LPC) interface. Various devices may be coupled to second interface 620 including, for example, a keyboard and/or mouse 622, communication devices 627 and storage circuitry 628. Storage circuitry 628 may be one or more non-transitory machine-readable storage media as described below, such as a disk drive or other mass storage device which may include instructions/code and data 630 and may implement the storage in some examples. Further, an audio I/O 624 may be coupled to second interface 620. Note that other architectures than the point-to-point architecture described above are possible. For example, instead of the point-to-point architecture, a system such as multiprocessor system 600 may implement a multi-drop interface or other such architecture.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

FIG. 7 illustrates a block diagram of an example processor 700 that may be used in the system of Fig. 6 in accordance with some embodiments. The depicted processor may have one or more cores and an integrated memory controller. The solid lined boxes illustrate a processor 700 with a single core 702(A), system agent unit circuitry 710, and a set of one or more interface controller unit(s) circuitry 716, while the optional addition of the dashed lined boxes illustrates an alternative processor 700 with multiple cores 702(A)-(N), a set of one or more integrated memory controller unit(s) circuitry 714 in the system agent unit circuitry 710, and special purpose logic 708, as well as a set of one or more interface controller units circuitry 716. Note that the processor 700 may be one of the processors 670 or 680, or co-processor 638 or 615 of FIG. 6.

Thus, different implementations of the processor 700 may include: 1) a CPU with the special purpose logic 708 being integrated graphics and/or scientific (throughput) logic (which may include one or more cores, not shown), and the cores 702(A)-(N) being one or more general purpose cores (e.g., general purpose in-order cores, general purpose out-of-order cores, or a combination of the two); 2) a coprocessor with the cores 702(A)-(N) being a large number of special purpose cores intended primarily for graphics and/or scientific (throughput); and 3) a coprocessor with the cores 702(A)-(N) being a large number of general purpose in-order cores. Thus, the processor 700 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 700 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 704(A)-(N) within the cores 702(A)-(N), a set of one or more shared cache unit(s) circuitry 706, and external memory (not shown) coupled to the set of integrated memory controller unit(s) circuitry 714. The set of one or more shared cache unit(s) circuitry 706 may include one or more mid-level caches, such as level 2 (L2), level 3 (L3), level 4 (L4), or other levels of cache, such as a last level cache (LLC), and/or combinations thereof. While in some examples interface network circuitry 712 (e.g., a ring interconnect) interfaces the special purpose logic 708 (e.g., integrated graphics logic), the set of shared cache unit(s) circuitry 706, and the system agent unit circuitry 710, alternative examples use any number of well-known techniques for interfacing such units. In some examples, coherency is maintained between one or more of the shared cache unit(s) circuitry 706 and cores 702(A)-(N). In some examples, interface controller units circuitry 716 couple the cores 702 to one or more other devices 718 such as one or more I/O devices, storage, one or more communication devices (e.g., wireless networking, wired networking, etc.), etc.

In some examples, one or more of the cores 702(A)-(N) are capable of multi-threading. The system agent unit circuitry 710 includes those components coordinating and operating cores 702(A)-(N). The system agent unit circuitry 710 may include, for example, power control unit (PCU) circuitry and/or display unit circuitry (not shown). The PCU may be or may include logic and components needed for regulating the power state of the cores 702(A)-(N) and/or the special purpose logic 708 (e.g., integrated graphics logic). The display unit circuitry is for driving one or more externally connected displays.

The cores 702(A)-(N) may be homogenous in terms of instruction set architecture (ISA). Alternatively, the cores 702(A)-(N) may be heterogeneous in terms of ISA; that is, a subset of the cores 702(A)-(N) may be capable of executing an ISA, while other cores may be capable of executing only a subset of that ISA or another ISA.

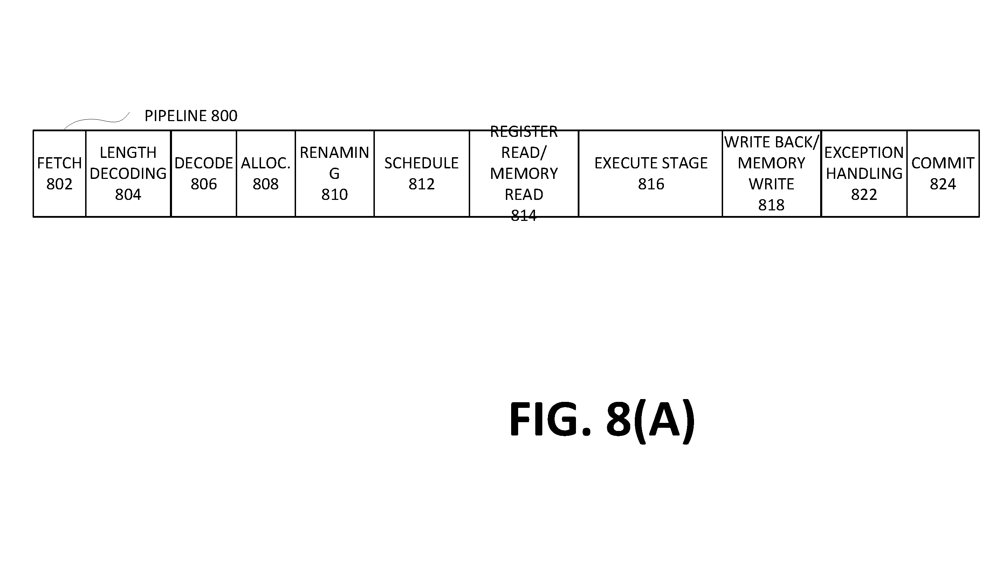

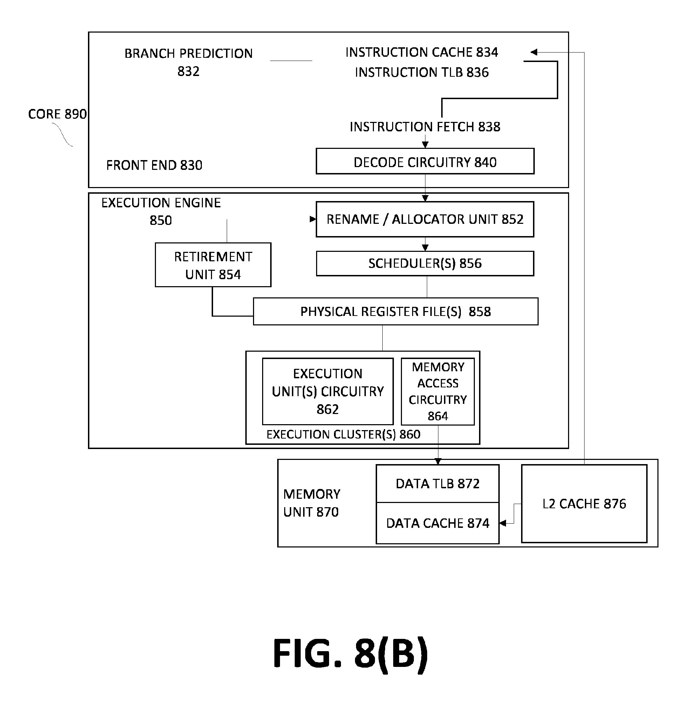

FIG. 8(A) is a block diagram illustrating both an exemplary in-order pipeline and an exemplary register renaming, out-of-order issue/execution pipeline according to examples. FIG. 8(B) is a block diagram illustrating both an exemplary example of an in-order architecture core and an exemplary register renaming, out-of-order issue/execution architecture core to be included in a processor according to examples. The solid lined boxes in FIGS. 8(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 8(A), a processor pipeline 800 includes a fetch stage 802, an optional length decoding stage 804, a decode stage 806, an optional allocation (Alloc) stage 808, an optional renaming stage 810, a schedule (also known as a dispatch or issue) stage 812, an optional register read/memory read stage 814, an execute stage 816, a write back/memory write stage 818, an optional exception handling stage 822, and an optional commit stage 824. One or more operations can be performed in each of these processor pipeline stages. For example, during the fetch stage 802, one or more instructions are fetched from instruction memory, and during the decode stage 806, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 806 and the register read/memory read stage 814 may be combined into one pipeline stage. In one example, during the execute stage 816, the decoded instructions may be executed, LSU address/data pipelining to an Advanced Microcontroller Bus (AMB) interface may be performed, multiply and add operations may be performed, arithmetic operations with branch results may be performed, etc.

By way of example, the exemplary register renaming, out-of-order issue/execution architecture core of FIG. 8(B) may implement the pipeline 800 as follows: 1) the instruction fetch circuitry 838 performs the fetch and length decoding stages 802 and 804; 2) the decode circuitry 840 performs the decode stage 806; 3) the rename/allocator unit circuitry 852 performs the allocation stage 808 and renaming stage 810; 4) the scheduler(s) circuitry 856 performs the schedule stage 812; 5) the physical register file(s) circuitry 858 and the memory unit circuitry 870 perform the register read/memory read stage 814; the execution cluster(s) 860 perform the execute stage 816; 6) the memory unit circuitry 870 and the physical register file(s) circuitry 858 perform the write back/memory write stage 818; 7) various circuitry may be involved in the exception handling stage 822; and 8) the retirement unit circuitry 854 and the physical register file(s) circuitry 858 perform the commit stage 824.

FIG. 8(B) shows a processor core 890 including front-end unit circuitry 830 coupled to an execution engine unit circuitry 850, and both are coupled to a memory unit circuitry 870. The core 890 may be a reduced instruction set architecture computing (RISC) core, a complex instruction set architecture computing (CISC) core, a very long instruction word (VLIW) core, or a hybrid or alternative core type. As yet another option, the core 890 may be a special-purpose core, such as, for example, a network or communication core, compression engine, coprocessor core, general purpose computing graphics processing unit (GPGPU) core, graphics core, or the like.

The front end unit circuitry 830 may include branch prediction circuitry 832 coupled to an instruction cache circuitry 834, which is coupled to an instruction translation lookaside buffer (TLB) 836, which is coupled to instruction fetch circuitry 838, which is coupled to decode circuitry 840. In one example, the instruction cache circuitry 834 is included in the memory unit circuitry 870 rather than the front-end circuitry 830. The decode circuitry 840 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 840 may further include an address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 840 may be implemented using various different mechanisms. Examples of suitable mechanisms include, but are not limited to, look-up tables, hardware implementations, programmable logic arrays (PLAs), microcode read only memories (ROMs), etc. In one example, the core 890 includes a microcode ROM (not shown) or other medium that stores microcode for certain macroinstructions (e.g., in decode circuitry 840 or otherwise within the front end circuitry 830). In one example, the decode circuitry 840 includes a micro-operation (micro-op) or operation cache (not shown) to hold/cache decoded operations, micro-tags, or micro-operations generated during the decode or other stages of the processor pipeline 800. The decode circuitry 840 may be coupled to rename/allocator unit circuitry 852 in the execution engine circuitry 850.

The execution engine circuitry 850 includes the rename/allocator unit circuitry 852 coupled to a retirement unit circuitry 854 and a set of one or more scheduler(s) circuitry 856. The scheduler(s) circuitry 856 represents any number of different schedulers, including reservations stations, central instruction window, etc. In some examples, the scheduler(s) circuitry 856 can include arithmetic logic unit (ALU) scheduler/scheduling circuitry, ALU queues, arithmetic generation unit (AGU) scheduler/scheduling circuitry, AGU queues, etc. The scheduler(s) circuitry 856 is coupled to the physical register file(s) circuitry 858. Each of the physical register file(s) circuitry 858 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 858 includes vector registers unit circuitry, writemask registers unit circuitry, and scalar register unit circuitry. These register units may provide architectural vector registers, vector mask registers, general-purpose registers, etc. The physical register file(s) circuitry 858 is coupled to the retirement unit circuitry 854 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 854 and the physical register file(s) circuitry 858 are coupled to the execution cluster(s) 860. The execution cluster(s) 860 includes a set of one or more execution unit(s) circuitry 862 and a set of one or more memory access circuitry 864. The execution unit(s) circuitry 862 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 856, physical register file(s) circuitry 858, and execution cluster(s) 860 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 864). It should also be understood that where separate pipelines are used, one or more of these pipelines may be out-of-order issue/execution and the rest in-order.

In some examples, the execution engine unit circuitry 850 may perform load store unit (LSU) address/data pipelining to an Advanced Microcontroller Bus (AMB) interface (not shown), and address phase and writeback, data phase load, store, and branches.

The set of memory access circuitry 864 is coupled to the memory unit circuitry 870, which includes data TLB circuitry 872 coupled to a data cache circuitry 874 coupled to a level 2 (L2) cache circuitry 876. In one exemplary example, the memory access circuitry 864 may include a load unit circuitry, a store address unit circuit, and a store data unit circuitry, each of which is coupled to the data TLB circuitry 872 in the memory unit circuitry 870. The instruction cache circuitry 834 is further coupled to the level 2 (L2) cache circuitry 876 in the memory unit circuitry 870. In one example, the instruction cache 834 and the data cache 874 are combined into a single instruction and data cache (not shown) in L2 cache circuitry 876, a level 3 (L3) cache circuitry (not shown), and/or main memory. The L2 cache circuitry 876 is coupled to one or more other levels of cache and eventually to a main memory.

The core 890 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 890 includes logic to support a packed data instruction set architecture extension (e.g., AVX1, AVX2), thereby allowing the operations used by many multimedia applications to be performed using packed data.

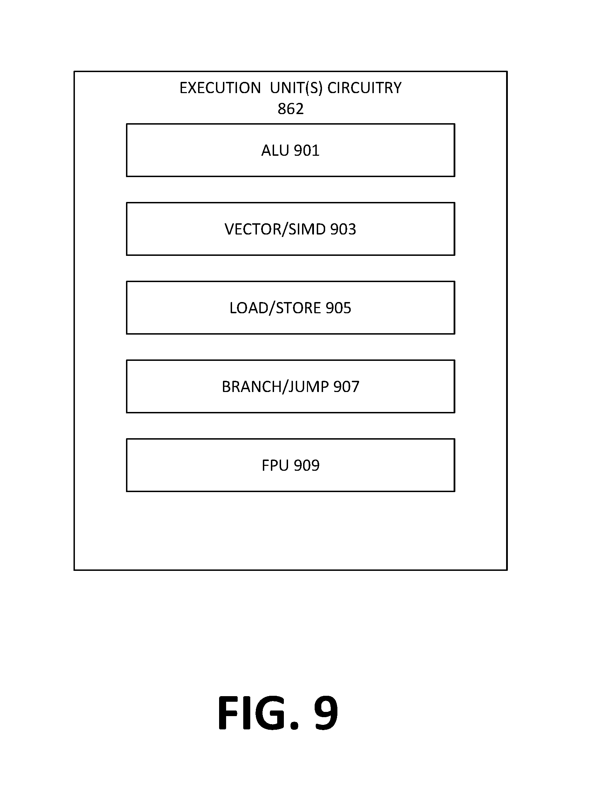

FIG. 9 illustrates examples of execution unit(s) circuitry, such as execution unit(s) circuitry 862 of FIG. 8(B). As illustrated, execution unit(s) circuity 862 may include one or more ALU circuits 901, optional vector/single instruction multiple data (SIMD) circuits 903, load/store circuits 905, branch/jump circuits 907, and/or Floating-point unit (FPU) circuits 909. ALU circuits 901 perform integer arithmetic and/or Boolean operations. Vector/SIMD circuits 903 perform vector/SIMD operations on packed data (such as SIMD/vector registers). Load/store circuits 905 execute load and store instructions to load data from memory into registers or store from registers to memory. Load/store circuits 905 may also generate addresses. Branch/jump circuits 907 cause a branch or jump to a memory address depending on the instruction. FPU circuits 909 perform floating-point arithmetic. The width of the execution unit(s) circuitry 862 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

Illustrative examples of the technologies disclosed herein are provided below. An embodiment of the technologies may include any one or more, and any compatible combination of, the examples described below.

Example 1 is an apparatus that includes a plurality of compute cores, a plurality of shared-cache circuit blocks, a coherent cache fabric (CCF), and a control circuit. The CCF is coupled to the compute cores and to the shared-cache circuit blocks, and it has a plurality of cache agent instances to provide coherent access by the cores to the shared-cache circuit blocks. The control circuit is coupled to the CCF to cause it to enter a reduced CCF mode and deactivate at least one of the cache agent instances at least partially in response to a sufficient number of the cores being inactive.

Example 2 includes the subject matter of example 1, and wherein the control circuit is to deactivate the at least one of the cache agent instances at least partially in response to a cache hit rate being below a hit rate threshold.

Example 3 includes the subject matter of any of examples 1-2, and wherein the control circuit is to deactivate the at least one of the cache agent instances at least partially in response to an uncore bandwidth being below a hit rate threshold.

Example 4 includes the subject matter of any of examples 1-3, and wherein the CCF includes a ring circuit to couple the cache agent instances to the cores and to the shared-cache circuit blocks.

Example 5 includes the subject matter of any of examples 1-4, and wherein the control circuit is to deactivate most or all of the ring circuit when entering the reduced CCF mode.

Example 6 includes the subject matter of any of examples 1-5, and wherein a portion of the ring circuit is to remain active in the reduced CCF mode, the control circuit to reconfigure the ring circuit portion to avoid cache agent instances and shared-cache circuit blocks that are inactive.

Example 7 includes the subject matter of any of examples 1-6, and wherein the control circuit is part of a system management control circuit.

Example 8 includes the subject matter of any of examples 1-7, and wherein the control circuit is at least partially implemented in a coherent compute complex (CCC) that includes the cores and CCF.

Example 9 includes the subject matter of any of examples 1-8, and wherein the CCF includes at least one system agent interface for communications with a processor system outside of the CCF.

Example 10 includes the subject matter of any of examples 1-9, and comprising a bridge circuit outside of the CCF to facilitate coherent transactions between an active core from the plurality of cores and a system agent domain when the CCF and shared-cache circuit blocks are inactive.

Example 11 includes the subject matter of any of examples 1-10, and wherein the plurality of cores include performance cores and efficiency cores coherently coupled together through the CCF.

Example 12 includes the subject matter of any of examples 1-11, and wherein the cache agent instances are each associated with a unique one of the shared-cache circuit blocks.

Example 13 includes the subject matter of any of examples 1-12, and wherein the CCF includes a system agent instance circuit.

Example 14 is an apparatus that includes a compute core complex and a computer readable storage medium. The compute core complex (CCC) has compute cores of a first type and compute cores of a second type coherently coupled together through a coherent cache fabric that includes a ring circuit with cache agent instances to coherently couple the first and second compute core types to each other and to shared-cache circuit blocks. The computer readable storage medium has instructions that when executed by a control circuit perform a method that includes monitoring the CCC to determine when a sufficient number of the first and second type compute cores are inactive, and causing the CCF to enter into a reduced power mode in response to determining that the sufficient number of the first and second type compute cores are inactive.

Example 15 includes the subject matter of example 14, and wherein causing the CCF to enter into the reduced power mode includes rerouting traffic from an active core through a bridge instead of the CCF and powering down the CCF and the shared-cache circuit blocks.

Example 16 includes the subject matter of any of examples 14-15, and wherein rerouting active core traffic through a bridge includes blocking the active core before powering down the CCF and switching the active core from the CCF to the bridge.

Example 17 includes the subject matter of any of examples 14-16, and wherein powering down the CCF and the shared-cache circuit blocks includes powering down all of the CCF and all of the shared-cache circuit blocks.

Example 18 includes the subject matter of any of examples 14-17, and wherein causing the CCF to enter into the reduced power mode includes flushing the shared-cache circuit blocks and reconfiguring the ring circuit to avoid cache agent instances that are inactive in the reduced power mode.

Example 19 includes the subject matter of any of examples 14-18, and wherein the sufficient number of inactive first and second type compute cores is all but one of the compute cores.

Example 20 includes the subject matter of any of examples 14-19, and wherein the sufficient number of inactive first and second type compute cores is all of the compute cores except one compute core of the first type.

Example 21 includes the subject matter of any of examples 14-20, and wherein the first compute core type is configured to have a higher performance capability than the second compute core type.

Example 22 is a processor system that includes an integrated circuit and a memory sub-system. The integrated circuit includes a plurality of compute cores, a plurality of shared-cache circuit blocks, a coherent cache fabric (CCF) coupled to the compute cores and to the shared-cache circuit blocks. The CCF has a plurality of cache agent instances to provide coherent access by the cores to the shared-cache circuit blocks. The control circuit is coupled to the CCF to cause it to enter a reduced CCF mode and deactivate at least one of the cache agent instances at least partially in response to a sufficient number of the cores being inactive. The memory sub-system is coupled to the integrated circuit from outside of the CCF.

Example 23 includes the subject matter of example 22, and wherein the control circuit is to deactivate the at least one of the cache agent instances at least partially in response to a cache hit rate being below a hit rate threshold.

Example 24 includes the subject matter of any of examples 22-23, and wherein the control circuit is to deactivate the at least one of the cache agent instances at least partially in response to an uncore bandwidth being below a hit rate threshold.

Example 25 includes the subject matter of any of examples 22-24, and wherein the CCF includes a ring circuit to couple the cache agent instances to the cores and to the shared-cache circuit blocks.

Example 26 includes the subject matter of any of examples 22-25, and wherein the control circuit is to deactivate most or all of the ring circuit when entering the reduced CCF mode.

Example 27 includes the subject matter of any of examples 22-26, and wherein a portion of the ring circuit is to remain active in the reduced CCF mode, the control circuit to reconfigure the ring circuit portion to avoid cache agent instances and shared-cache circuit blocks that are inactive.

Example 28 includes the subject matter of any of examples 22-27, and wherein the control circuit is part of a system management control circuit.

Example 29 includes the subject matter of any of examples 22-28, and wherein the control circuit is at least partially implemented in a coherent compute complex (CCC) that includes the cores and CCF.

Example 30 includes the subject matter of any of examples 22-29, and wherein the CCF includes at least one system agent interface for communications with a processor system outside of the CCF.

Example 31 includes the subject matter of any of examples 22-30, and comprising a bridge circuit outside of the CCF to facilitate coherent transactions between an active core from the plurality of cores and a system agent domain when the CCF and shared-cache circuit blocks are inactive.

Example 32 includes the subject matter of any of examples 22-31, and wherein the plurality of cores include performance cores and efficiency cores coherently coupled together through the CCF.

Example 33 includes the subject matter of any of examples 22-32, and wherein the cache agent instances are each associated with a unique one of the shared-cache circuit blocks.

Example 34 includes the subject matter of any of examples 22-33, and wherein the CCF includes a system agent instance circuit.

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included.

Throughout the specification, and in the claims, the term "connected" means a direct connection, such as electrical, mechanical, or magnetic connection between the things that are connected, without any intermediary devices.

The term "coupled" means a direct or indirect connection, such as a direct electrical, mechanical, or magnetic connection between the things that are connected or an indirect connection, through one or more passive or active intermediary devices.

The term "circuit" or "module" may refer to one or more passive and/or active components that are arranged to cooperate with one another to provide a desired function. It should be appreciated that different circuits or modules may consist of separate components, they may include both distinct and shared components, or they may consist of the same components. For example, A controller circuit may be a first circuit for performing a first function, and at the same time, it may be a second controller circuit for performing a second function, related or not related to the first function.

The meaning of "in" includes "in" and "on" unless expressly distinguished for a specific description.

The terms "substantially," "close," "approximately," "near," and "about," unless otherwise indicated, generally refer to being within +/-10% of a target value.

Unless otherwise specified, the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner

For the purposes of the present disclosure, phrases "A and/or B" and "A or B" mean (A), (B), or (A and B). For the purposes of the present disclosure, the phrase "A, B, and/or C" means (A), (B), (C), (A and B), (A and C), (B and C), or (A, B and C).

It is pointed out that those elements of the figures having the same reference numbers (or names) as the elements of any other figure can operate or function in any manner similar to that described but are not limited to such.

For purposes of the embodiments, unless expressly described differently, the transistors in various circuits and logic blocks described herein may be implemented with any suitable transistor type such as field effect transistors (FETs) or bipolar type transistors. FET transistor types may include but are not limited to metal oxide semiconductor (MOS) type FETs such as tri-gate, FinFET, and gate all around (GAA) FET transistors, as well as tunneling FET (TFET) transistors, ferroelectric FET (FeFET) transistors, or other transistor device types such as carbon nanotubes or spintronic devices.

In addition, well-known power/ground connections to integrated circuit (IC) chips and other components may or may not be shown within the presented figures, for simplicity of illustration and discussion, and so as not to obscure the disclosure. Further, arrangements may be shown in block diagram form in order to avoid obscuring the disclosure, and also in view of the fact that specifics with respect to implementation of such block diagram arrangements are dependent upon the platform within which the present disclosure is to be implemented.

As defined herein, the term "computer readable storage medium" means a storage medium that contains or stores program code for use by or in connection with an instruction execution system, apparatus, or device. As defined herein, a "computer readable storage medium" is not a transitory, propagating signal per se. A computer readable storage medium may be, but is not limited to, an electronic storage device, a magnetic storage device, an optical storage device, an electromagnetic storage device, a semiconductor storage device, or any suitable combination of the foregoing. Memory elements, as described herein, are examples of a computer readable storage medium.

As defined herein, the term "if" means "when" or "upon" or "in response to" or "responsive to," depending upon the context. Thus, the phrase "if it is determined" or "if [a stated condition or event] is detected" may be construed to mean "upon determining" or "in response to determining" or "upon detecting [the stated condition or event]" or "in response to detecting [the stated condition or event]" or "responsive to detecting [the stated condition or event]" depending on the context. As defined herein, the term "responsive to" means responding or reacting readily to an action or event. Thus, if a second action is performed "responsive to" a first action, there is a causal relationship between an occurrence of the first action and an occurrence of the second action. The term "responsive to" indicates the causal relationship.

As defined herein, the term "processor" means at least one hardware circuit configured to carry out instructions contained in program code. The hardware circuit may be implemented with one or more integrated circuits. Examples of a processor include, but are not limited to, a central processing unit (CPU), an array processor, a vector processor, a digital signal processor (DSP), a field-programmable gate array (FPGA), a programmable logic array (PLA), an application specific integrated circuit (ASIC), programmable logic circuitry, a graphics processing unit (GPU), a controller, and so forth. It should be appreciated that a logical processor, on the other hand, is a processing abstraction associated with a core, for example when one or more SMT cores are being used such that multiple logical processors may be associated with a given core, for example, in the context of core thread assignment.

It should be appreciated that a processor or processor system may be implemented in various different manners. For example, it may be implemented on a single die, multiple dies (dielets, chiplets), one or more dies in a common package, or one or more dies in multiple packages. Along these lines, some of these blocks may be located separately on different dies or together on two or more different dies.

While the flow diagrams in the figures show a particular order of operations performed by certain embodiments of the invention, it should be understood that such order is exemplary (e.g., alternative embodiments may perform the operations in a different order, combine certain operations, overlap certain operations, etc.).

While the invention has been described in terms of several embodiments, those skilled in the art will recognize that the invention is not limited to the embodiments described, can be practiced with modification and alteration within the scope of the appended claims. The description is thus to be regarded as illustrative instead of limiting.

## Claims

1. An apparatus, comprising:
a plurality of compute cores
a plurality of shared-cache circuit blocks;
a coherent cache fabric, CCF, coupled to the compute cores and to the shared-cache circuit blocks, the CCF having a plurality of cache agent instances to provide coherent access by the cores to the shared-cache circuit blocks; and
a control circuit coupled to the CCF to cause it to enter a reduced CCF power mode and deactivate at least one of the cache agent instances at least partially in response to a sufficient number of the cores being inactive.

2. The apparatus of claim 1, wherein the control circuit is to deactivate the at least one of the cache agent instances at least partially in response to a cache hit rate being below a hit rate threshold.

3. The apparatus of any of claims 1-2, wherein the control circuit is to deactivate the at least one of the cache agent instances at least partially in response to an uncore bandwidth being below a hit rate threshold.

4. The apparatus of any of claims 1-3, wherein the CCF includes a ring circuit to couple the cache agent instances to the cores and to the shared-cache circuit blocks.

5. The apparatus of claim 4, wherein the control circuit is to deactivate most or all of the ring circuit when entering the reduced CCF power mode.

6. The apparatus of claim 5, wherein a portion of the ring circuit is to remain active in the reduced CCF power mode, the control circuit to reconfigure the ring circuit portion to avoid cache agent instances and shared-cache circuit blocks that are inactive.

7. The apparatus of any of claims 4-6, wherein the control circuit is part of a system management control circuit.

8. The apparatus of claim 1 or claim 7, wherein the control circuit is at least partially implemented in a coherent compute complex, CCC, that includes the cores and CCF.

9. The apparatus of claim 8, wherein the CCF includes at least one system agent interface for communications with a processor system outside of the CCF.

10. The apparatus of any of claims 1-9, comprising a bridge circuit outside of the CCF to facilitate coherent transactions between an active core from the plurality of cores and a system agent domain when the CCF and shared-cache circuit blocks are inactive.

11. The apparatus of any of claims 1-10, wherein the plurality of cores include performance cores and efficiency cores coherently coupled together through the CCF.

12. The apparatus of any of claims 1-11, wherein the cache agent instances are each associated with a unique one of the shared-cache circuit blocks.

13. The apparatus of any of claims 1-12, wherein the CCF includes a system agent instance circuit.

14. The apparatus of any of claims 1-13 comprising a computer readable storage medium having instructions that when executed by the control circuit cause it to perform a method including monitoring the cores to determine when a sufficient number are inactive, and causing the CCF to enter into the reduced CCF power mode in response to determining that the sufficient number of the compute cores are inactive.

15. The apparatus of claim 14, wherein causing the CCF to enter into the reduced CCF power mode includes rerouting traffic from an active core through a bridge and powering down the CCF and the shared-cache circuit blocks.
